# EUROPEAN PATENT SPECIFICATION

(11) **EP 4 587 305 B1**
(45) Date of publication and mention of the grant of the patent: **18.03.2026**
(21) Application number: 23762203.0
(22) Date of filing: 25.08.2023
(51) Int. Cl.: B60T 8/17, B60T 13/26, B60T 7/20, B60T 13/66, B60T 13/68

(54) **TRUCK TRAILER INTERFACE**
ANHÄNGERSCHNITTSTELLE FÜR LASTWAGEN
INTERFACE DE REMORQUE DE CAMION

(30) Priority: 15.09.2022 GB 202213584
(43) Date of publication of application: 23.07.2025
(73) Proprietor: KNORR-BREMSE Systeme für Nutzfahrzeuge GmbH, 80809 München (DE)
(72) Inventor: STAAHL, Christian, 80809 Munich (DE); MEDERER, Martin, 80809 Munich (DE)
(86) International application number: PCT/EP2023/073399
(87) International publication number: WO 2024/056352

(56) References cited:
- EP-A2- 1 300 308
- DE-A1- 102007 024 310
- GB-A- 2 462 072
- US-A1- 2016 152 216
- US-A1- 2018 257 616

## Description

The invention relates to a pneumatic interface between a trailer and a towing vehicle, in particular, but not exclusively an interface between a heavy truck and trailer.

In view of the increasing digitization and automation of motor vehicles towards highly automated driving, functions traditionally undertaken by the driver are at least partially replaced by vehicle automation systems. Such automation requires an integration of additional functions, sensors and other electrical subsystems. It is expected that as vehicles are automated, general acceptance of or tolerance towards road accidents by users and legislators will drop significantly, as road fatalities and injuries caused by machines will not be as accepted as driver error.

In addition to this, with the increasing worth of the trailer the availability of the trailer will be ever so more important to the operator. This means that compared to known vehicles, there is pressure to increase the level of safety, ensure the availability and performance of critical functions and to reduce the error rate.

In order to operate in a commercially viable way, logistics operators need to be able to use their trailers in a very flexible way. One very important part of that flexibility is the possibility to pair a trailer with just about any towing vehicle in the fleet. The requirements associated are referred to as compatibility and interoperability within the industry and apply to coupling equipment, pneumatic and electrical connectors as well as communication protocols.

These requirements lead to a certain degree of sluggishness with regard to technological progress in the areas mentioned above. This is a result of the different age of vehicles in a fleet and the necessity of compatibility and interoperability between all of them.

One example of this is the current design of pneumatic coupling heads. Two coupling heads exist, a red one for supply pressure and a yellow one for brake or control pressure. Supply pressure is normally fed from the third pneumatic circuit in a towing vehicle, with the first and second circuits being used for brake circuits 1 and 2 respectively. This design has proven to be very robust all over the world. In Europe there is a form of redundancy for the brake pressure signal as it is also sent via CAN message on the ISO7638 connector. For supply pressure however, there is no redundancy and a rupture or disconnect of the supply line or a fault in the associated pneumatic circuit in the towing vehicle will trigger the emergency brake function. This will cause automatic braking of the towed vehicle on some or all wheels.

In an automated driving use case this would force the vehicle combination to an uncontrolled and immediate stop.

A pragmatic approach would be to simply add another supply line. However this is very costly, as new vehicles would require the new interface and additionally the old ones as well if the compatibility and interoperability is to be maintained. Such interface additions have been offered in Europe in the past, e.g. duomatic connectors. However the relatively low installation rate confirms the price sensitivity of the market.

GB2462072 discloses a vehicle braking system including an electrical braking control unit having an electrical input for an electrical braking demand signal, the electrical input being electrically connected to an electrical signal transmitting device, wherein the system further includes a fluid flow line and a pressure sensor which is connected to an electrical input of the electrical signal transmitting device and is adapted to transmit an electrical pressure signal indicative of the pressure in the fluid flow line to the electrical input of the electrical signal transmitting device, the electrical signal transmitting device being operable to transmit the electrical pressure signal received from the pressure sensor to the electrical braking control unit. This solution does not provide redundancy.

The present invention therefore seeks to provide redundancy in the pneumatic supply line from a truck to a trailer.

According to a first aspect of the invention there is provided in accordance with the features of Claim 1

The concept underlying the invention is to use the existing two pneumatic coupling heads to provide a redundant pneumatic supply from two separate circuits in the towing vehicle. This can apply not only for connections between trucks and trailers but in the more general sense between towing vehicles (which can also be a trailer in case of multi trailer or road train combinations) and towed vehicles.

Preferred aspects are claimed in the sub-claims.

Exemplary embodiments of the invention will now be described in greater detail with reference to the drawings in which:
Fig. 1 shows schematically the head board of semi-trailer;
Fig. 2 shows a first embodiment of the pneumatic connections between a towing and towed vehicle;
Fig. 3 shows a second embodiment of the pneumatic connections between a towing and towed vehicle;
Fig. 4 shows a third embodiment of the pneumatic connections between a towing and towed vehicle;
Fig. 5 shows a further embodiment with more than one electrical connection.

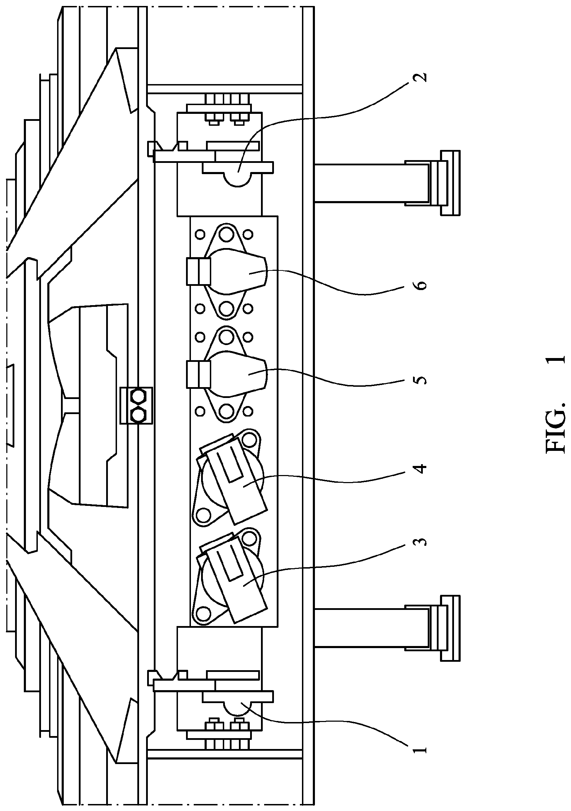

Fig. 1 shows schematically the head board of semi-trailer in accordance with European standards having a red line pneumatic connection 1 for emergency braking and a yellow line pneumatic connection 2 for service braking. Four electrical connectors are arranged between the pneumatic connections, namely a 15 pin ISO 12098 connector 3 with CAN bus, a 7 pin ISO 7638-01 connector 4 for EBS functionality, a 7 pin ISO 1185 connector 5 and a 7 pin ISO 3731 connector 6.

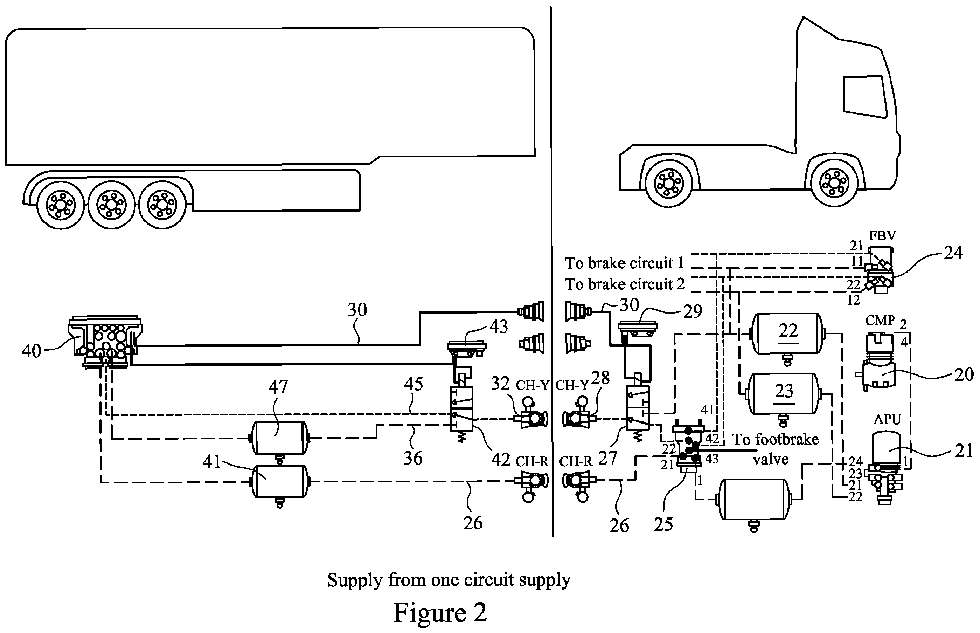

Figure 2 shows a first embodiment, in which an electrical connection between the towing and towed vehicle can be used to convey the brake pressure signal in a digital or analogue way.

In the embodiment of Figure 2, the towing vehicle is shown as a truck, for which the brake system is shown schematically. The truck brake system comprises a compressor 20 connected to an air processing unit 21, which supplies air to first and second reservoirs 22, 23. The outlet of each reservoir 22,23 is pneumatically connected to the foot brake valve 24 and provides the supply pressure to first and second brake circuits on the truck. The air processing unit 21 is further connected to a third reservoir, the output of which is connected to a trailer control module 25. The trailer control module receives inputs from the first and second brake circuits and is pneumatically connected to the trailer via the (red) supply line 26.

The trailer control module 25 is further pneumatically connected to solenoid 27 providing a (yellow) control line pressure connection 28 to the trailer. The solenoid 27 receives a further pneumatic input from the reservoir 22. An ECU 29 is provided which controls the operation of the solenoid 27 and is provided with an electrical signal on line 30.

The trailer brake system is also shown schematically, with a trailer brake module 40, which receives a supply pressure via line 26 from a first trailer reservoir 41. The trailer brake module 40 also receives an electrical signal on the line 30, which is connected to the truck via the standards compliant connectors 32.

A solenoid 42 is provided, which is controlled by ECU 43 which receives control signals via line 44 from the trailer brake module. The solenoid has a pneumatic connection to the control line 28 and has control line 45 and supply line 36 outputs to the trailer brake module. A further reservoir 47 is provided in line 36.

The existence of this electrical signal on line 30 means that the brake pressure signal on the yellow coupling head 28 has redundancy. This pneumatic connection can now be used to provide a second air supply to the trailer or towed vehicle braking system. In the towing vehicle the ECU 29 is connected to the ECU 43 in the towed vehicle. The two ECUs can exchange information and determine:
a. Is the brake system in both vehicles compatible with an electronic brake signal?
b. Is the vehicle compatible with receiving/providing secondary supply pressure via the yellow coupling head?

If the answer to both queries is yes, the vehicles can initiate a pneumatic switching device
- to provide air supply from the brake circuit supply 1 or 2 to the yellow coupling head in the towing vehicle and
- redirect the air from the yellow coupling head to a second pneumatic circuit in the towed vehicle

The ECUs in the Figure 2 may be standalone ECUs or their function may also be integrated in the brake system ECU, a vehicle control ECU or any other existing ECU in the towed/towing vehicle.

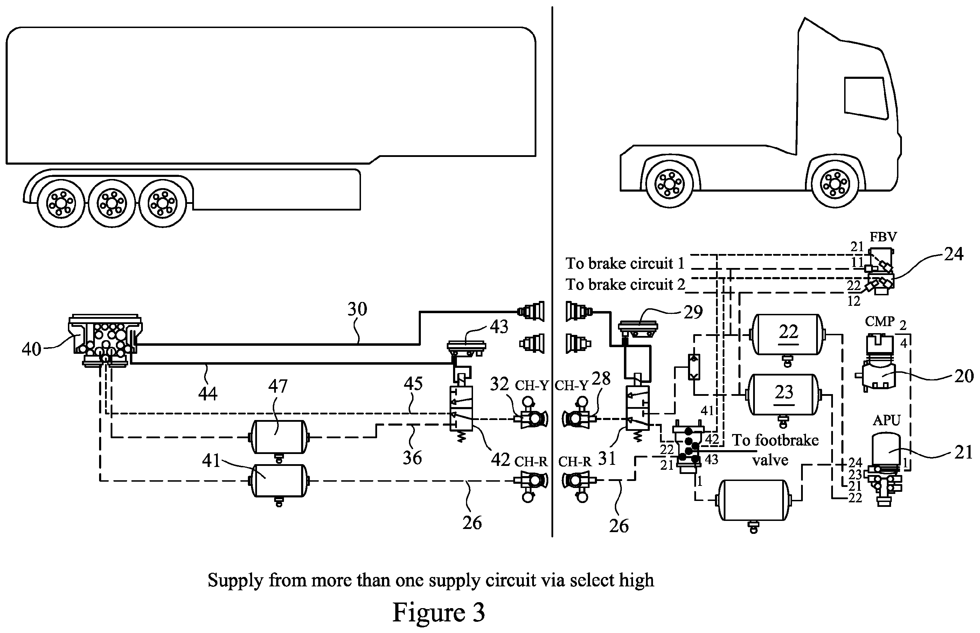

In Figure 3, like parts are shown with like numbers. In this embodiment, the supply to the valve 27 is switchable between the first and second brake circuits. This switching device is shown as a selection valve 31 such as a select high valve or double-check valve. However it can be any type of valve or redirection mechanism that serves the purpose described above. As with the embodiment of Figure 2, in the event of failure, or any other case where it is deemed required that the yellow coupling head convey the brake pressure signal, the switching mechanism can revert to its default position so that the yellow coupling head on the towing vehicle is once again connected to the brake pressure signal coming from the brake system and the coupling head on the towed vehicle is connected to the brake system.

This embodiment is the same as the first embodiment except when it comes to the pneumatic supply being fed to the yellow coupling head. In this embodiment at least two pneumatic supply circuits are used and they are combined with select high valves. Figure 3 shows this for two circuits, brake circuit supply 1 and 2, but additional circuits could be used. The select high valves can either be cascaded or an integrated version that supports more inputs.

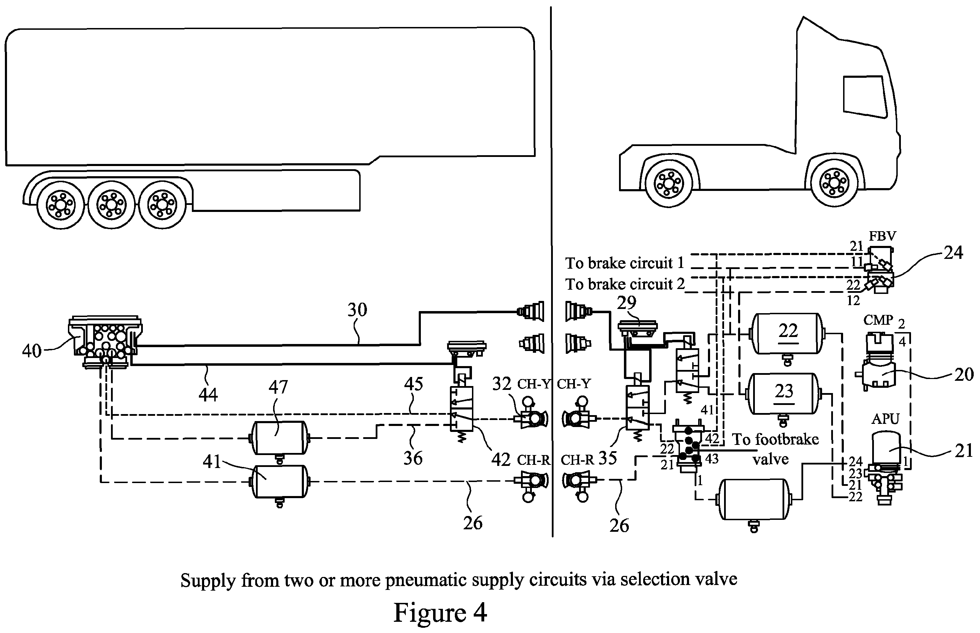

Figure 4 shows a further embodiment in which brake pressure supply is from more than one supply circuit via a 3/2 valve 35. This embodiment also uses multiple supply circuits to feed to the yellow coupling head. The main difference to the second embodiment is that the supply source can be actively selected using information gathered in the towed vehicle and/or received from the towing vehicle. The selection can be made by the ECU 29 or another one that is connected to it. In Figure 4 the selection valve is an electrically controlled 3/2 valve. It may be any other valve or device that serves this purpose.

The selection / switching devices illustrated in Figures 2 to 4, may be standalone components as illustrated. They may also be integrated in existing components, e.g. in the trailer control module in the towing vehicle or in the brake system in towing / towed vehicle.

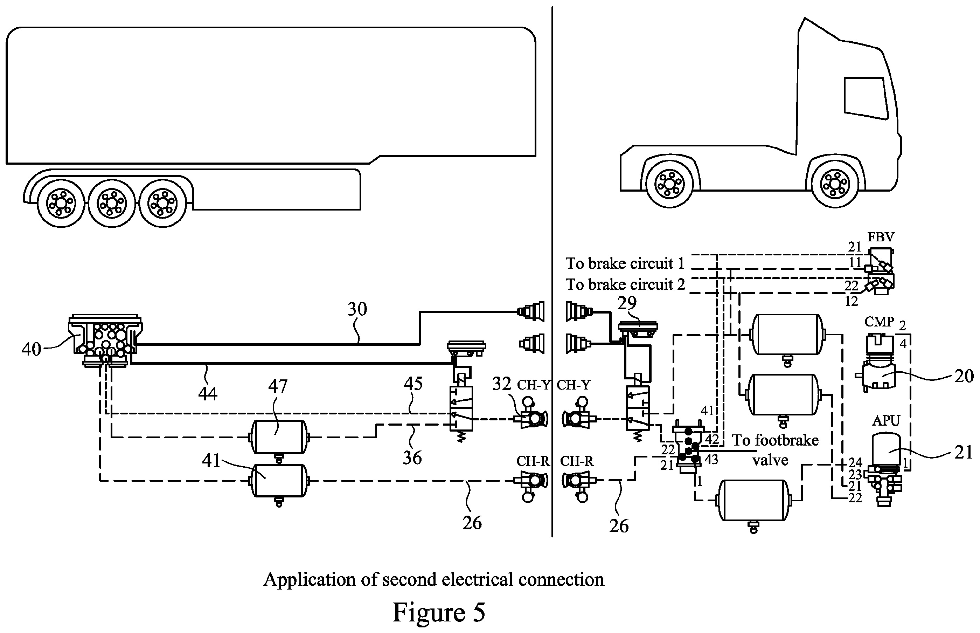

Figure 5 shows a further embodiment with more than one electrical connection which is used to facilitate the communication of the ECUs in the towing and towed vehicle. Figure 5 shows this for the first embodiment but it is compatible with all design variants.

In the case of each embodiment, in a first mode of operation, the ECU 29 or equivalent checks whether there is a corresponding capability on the trailer when the truck ignition is turned on after the trailer is connected to the truck. In this mode, the supply would switch to a redundant supply mode as soon as it determines both vehicles to be compatible. It would switch back to conventional mode if a fault that renders the towed/towing vehicle incompatible with redundant supply is detected.

An alternative mode would default to the conventional mode and only switch control pressure to supply pressure if a fault in the primary supply on the red coupling head is detected.

## Claims

1. A pneumatic brake system for a towing and towed vehicle, wherein the brake system comprises means for supplying a supply pressure (1) and means for supplying a control pressure (2) to the towed vehicle, wherein an electrical connection is provided between the towing and towed vehicles, each of the towing and towed vehicles being provided with a respective ECU (29,43), **characterized in that** the ECUs (29,43) are able to exchange information and determine a first condition whether the brake system in both towed and towing vehicle is compatible with an electronic brake signal and a second condition whether the brake system is compatible with secondary supply pressure being applied via the means for supplying a control pressure (2) and in the event that both conditions are fulfilled, the brake system actuates a switching device or devices (25, 27, 31) to direct air from the means for supplying a control pressure to a second pneumatic supply circuit (36) in the towed vehicle.

2. A pneumatic brake system according to Claim 1, wherein the means for supplying a control pressure (2) is switchable so that it receives a brake pressure signal or supply pressure from the towed vehicle brake system.

3. A pneumatic brake system according to Claim 1 or Claim 2, wherein the switching device is an electrically or pneumatic controllable 3/2 valve (35).

4. A pneumatic brake system according to Claim 1, wherein pressure is supplied from more than one supply circuit via a selection valve (25, 27, 31).

5. A pneumatic brake system according to Claim 4, wherein the the supply source can be actively selected using information gathered in the towed vehicle and/or received from the towing vehicle.

6. A pneumatic brake system according to any one of Claims 1 to 5, wherein the ECU on the towing vehicle checks whether there is a corresponding capability on the towed vehicle when an ignition on the truck is turned on after the trailer is connected to the truck

7. A pneumatic brake system according to Claim 6, wherein the supply pressure switches when it is determined that towed and towing vehicle are compatible.

8. A pneumatic brake system according to Claim 7, wherein the supply pressure only switches if a fault in the primary supply (1) is detected.

## Patentansprüche

1. Pneumatisches Bremssystem für ein Zugfahrzeug und ein gezogenes Fahrzeug, wobei das Bremssystem Mittel zum Zuführen eines Zufuhrdrucks (1) und Mittel zum Zuführen eines Steuerdrucks (2) zu dem gezogenen Fahrzeug umfasst, wobei eine elektrische Verbindung zwischen dem Zugfahrzeug und dem gezogenen Fahrzeug bereitgestellt wird, wobei sowohl das Zugfahrzeug als auch das gezogene Fahrzeug mit einer jeweiligen ECU (29, 43) bereitgestellt ist, **dadurch gekennzeichnet, dass** die ECUs (29, 43) Informationen austauschen und eine erste Bedingung, ob das Bremssystem sowohl im gezogenen Fahrzeug als auch im Zugfahrzeug mit einem elektronischen Bremssignal kompatibel ist, und eine zweite Bedingung, ob das Bremssystem mit einem sekundären Zufuhrdruck kompatibel ist, der über das Mittel zum Zuführen eines Steuerdrucks (2) angelegt wird, bestimmen können, und falls beide Bedingungen erfüllt sind, das Bremssystem eine Schaltvorrichtung oder Schaltvorrichtungen (25, 27, 31) betätigt, um Luft vom Mittel zum Zuführen eines Steuerdrucks zu einem zweiten pneumatischen Zufuhrkreis (36) in das gezogene Fahrzeug zu leiten.

2. Pneumatisches Bremssystem nach Anspruch 1, wobei das Mittel zum Zuführen eines Steuerdrucks (2) umschaltbar ist, sodass es ein Bremsdrucksignal oder einen Zufuhrdruck vom Bremssystem des gezogenen Fahrzeugs empfängt.

3. Pneumatisches Bremssystem nach Anspruch 1 oder Anspruch 2, wobei die Schaltvorrichtung ein elektrisch oder pneumatisch steuerbares 3/2-Wege-Ventil (35) ist.

4. Pneumatisches Bremssystem nach Anspruch 1, wobei Druck über ein Auswahlventil (25, 27, 31) aus mehr als einem Zufuhrkreis zugeführt wird.

5. Pneumatisches Bremssystem nach Anspruch 4, wobei die Zufuhrquelle aktiv unter Verwendung von Informationen ausgewählt werden kann, die im gezogenen Fahrzeug erfasst werden und/oder vom Zugfahrzeug empfangen werden.

6. Pneumatisches Bremssystem nach einem der Ansprüche 1 bis 5, wobei die ECU des Zugfahrzeugs prüft, ob beim gezogenen Fahrzeug eine entsprechende Fähigkeit besteht, wenn eine Zündung des Lastwagens eingeschaltet wird, nachdem der Anhänger an den Lastwagen angehängt wurde.

7. Pneumatisches Bremssystem nach Anspruch 6, wobei der Zufuhrdruck wechselt, wenn bestimmt wird, dass das gezogene Fahrzeug und das Zugfahrzeug kompatibel sind.

8. Pneumatisches Bremssystem nach Anspruch 7, wobei der Zufuhrdruck nur dann wechselt, wenn ein Fehler in der primären Zufuhr (1) erkannt wird.

## Revendications

1. Système de freinage pneumatique pour un véhicule tracteur et un véhicule tracté, dans lequel le système de freinage comprend des moyens pour fournir une pression d'alimentation (1) et des moyens pour fournir une pression de commande (2) au véhicule tracté, dans lequel une connexion électrique est prévue entre les véhicules tracteur et tracté, chacun des véhicules tracteur et tracté étant équipé d'un calculateur (29, 43) respectif, **caractérisé en ce que** les calculateurs (29, 43) sont capables d'échanger des informations et de déterminer une première condition, à savoir si le système de freinage dans les véhicules tracteur et tracté est compatible avec un signal de freinage électronique et une seconde condition, à savoir si le système de freinage est compatible avec l'application d'une pression d'alimentation secondaire par l'intermédiaire des moyens pour fournir une pression de commande (2) et dans l'éventualité ou les deux conditions sont remplies, le système de freinage actionne un ou plusieurs dispositifs de commutation (25, 27, 31) pour diriger l'air des moyens pour fournir une pression de commande vers un second circuit d'alimentation pneumatique (36) dans le véhicule tracté.

2. Système de freinage pneumatique selon la revendication 1, dans lequel les moyens pour fournir une pression de commande (2) sont commutables de manière à recevoir un signal de pression de freinage ou une pression d'alimentation en provenance du système de freinage de véhicule tracté.

3. Système de freinage pneumatique selon la revendication 1 ou la revendication 2, dans lequel le dispositif de commutation est une vanne à 3/2 voies à commande électrique ou pneumatique (35).

4. Système de freinage pneumatique selon la revendication 1, dans lequel une pression est fournie par plus d'un circuit d'alimentation par l'intermédiaire d'une vanne de sélection (25, 27, 31).

5. Système de freinage pneumatique selon la revendication 4, dans lequel la source d'alimentation peut être sélectionnée activement à l'aide d'informations recueillies dans le véhicule tracté et/ou reçues à partir du véhicule tracteur.

6. Système de freinage pneumatique selon l'une quelconque des revendications 1 à 5, dans lequel le calculateur du véhicule tracteur vérifie la présence d'une capacité correspondante sur le véhicule tracté lorsqu'un contact du camion est mis après l'attelage de la remorque au camion.

7. Système de freinage pneumatique selon la revendication 6, dans lequel la pression d'alimentation commute lorsqu'il est déterminé que le véhicule tracté et le véhicule tracteur sont compatibles.

8. Système de freinage pneumatique selon la revendication 7, dans lequel la pression d'alimentation ne commute que si un défaut dans l'alimentation principale (1) est détecté.
